# EUROPEAN PATENT APPLICATION

(11) **EP 1 764 262 A1**
(43) Date of publication of application: **21.03.2007**
(21) Application number: 06017787.0
(22) Date of filing: 25.08.2006
(51) Int. Cl.: B60N 3/00, A47C 7/70

(54) **Folding tray assembly**

(30) Priority: 16.09.2005 US 717827 P; 13.03.2006 US 374618
(71) Applicant: E & E Manufacturing Company, Inc., Plymouth, MI 48170 (US)
(72) Inventor: Cutshall, Mark L., Livonia MI 48154 (US); Kwiecinski, Jozef, Macomb MI 48042 (US); Scott, Lawrence A., Brighton MI 48116 (US); Cebula, Harry, Livonia MI 48152 (US)
(74) Representative: Duxbury, Stephen

(57) **Abstract**

A folding tray assembly (10) includes a support member (14) and a tray member (12). The tray member is pivotably supported by the support member and is moveable relative thereto between a use position and a stowed position. The folding tray assembly further includes a locking mechanism (16) operable to selectively lock the tray member to the support member in one of either the use position or the stowed position. The locking mechanism is housed within the tray assembly such that the mechanism is not visible or accessible by an occupant, but rather remotely actuated by a handle (122) or lever. The support member, tray member, and locking mechanism are assembled together using integrally formed fasteners and do not require the use of individual mechanical fasteners. In one exemplary embodiment, the support member, tray member, and locking mechanism are snap-fit together using a tab/slot arrangement.

## Description

### CROSS-REFERENCE TO RELATED APPLICATIONS

This application claims the benefit of U.S. Provisional Application No. 60/661,317, filed on March 11, 2005 and U.S. Provisional Application No. 60/717,827, filed on September 16, 2005. The disclosures of the above applications are incorporated herein by reference.

### FIELD

The present disclosure relates to tray assemblies, and more particularly, to folding tray assemblies that may be incorporated into seat assemblies.

### BACKGROUND

In seating applications, it is desirable to provide a tray for use by an occupant when as a storage device or work surface. Further, it is desirable that the tray be capable of being stowed (e.g. folding away) when not in use to allow an occupant to maximize the space around the seat assembly. Further yet, it is desirable that the tray be capable of supporting relatively large loads while not requiring an external brace or support. Typically, a folding tray assembly is mounted to the side of a seat assembly and pivots between a use position and a stowed position, thus providing the occupant with a generally horizontal tray when in the use position.

Conventional tray assemblies are typically mounted to one side of a seat assembly and provide a surface for supporting items such as a drink or a laptop for use by an occupant when using the seat. The tray surface is supported by a stationary bracket fixedly mounted to either the seat bottom or the seatback. In either case, the tray is commonly connected to the support bracket through a hinge that is able to pivot relative to the support bracket about the hinge. Conventional tray assemblies provide for movement between a stowed position and a use position. In the stowed position, the tray folds such that a top surface of the tray runs parallel with the support bracket. When the tray is in the use position, the tray surface is generally perpendicular to the support bracket in an effort to provide a flat surface for use by the occupant.

To maintain the relatively flat surface of the tray while in the use position, conventional tray assemblies provide a locking mechanism that enables the tray to maintain a generally perpendicular relationship with the support bracket. Typically, the locking mechanism includes an external support arm, a linkage, and a number of individual mechanical fasteners (i.e., screws, nuts, bolts, clips, etc.). The support arm provides added support for the tray while the linkage allows the support arm to fold flat when the tray is in the stowed position. The fasteners are used to attach individual components of the tray as well as to attach the support arm and linkage to the tray. Such an arrangement is disclosed in U.S. Pat. No. 5,588,697 to Yoshida.

While conventional tray assemblies for use in combination with a seat assembly adequately provide a tray moveable between a stowed position and a use position, conventional tray assemblies suffer from the fact that they require exposed linkages to adequately support the tray surface and pivot about the support bracket. Exposed linkages may become hazardous when actuating the tray assembly between the stowed and use positions, whereby an occupant may inadvertently pinch a finger or snag an article of clothing during use. Furthermore, such conventional tray assemblies suffer from requiring individual mechanical fasteners such as screws and bolts to connect respective components of the tray assembly. The individual fasteners increase the complexity of the tray assembly and generally add to manufacturing costs.

Therefore a tray assembly for use with a seat assembly that is movable between a stowed position and a use position that can support a relatively high amount of weight while not requiring exposed links or support structure is desirable in the industry. Further, a tray assembly that includes a locking mechanism housed within the tray is desirable in the industry. Further yet, a tray assembly that minimizes, if not eliminates, individual fasteners is also desirable.

The statements in this section merely provide background information related to the present disclosure and may not constitute prior art.

### SUMMARY

A folding tray assembly includes a support member and a tray member. The tray member is pivotably supported by the support member and moveable relative thereto between a use position and a stowed position. The folding tray assembly further includes a locking mechanism operable to selectively lock the tray member to the support member in one of either the use position or the stowed position. The locking mechanism is housed within the tray assembly such that the mechanism is not visible or accessible by an occupant, but rather remotely actuated by a handle or lever.

In another embodiment of the present teachings, a folding tray assembly includes a support member and a tray member. The tray member is pivotably supported by the support member and is moveable relative thereto between a use position and a stowed position. The folding tray assembly further includes a locking mechanism that selectively locks the tray member to the support member in one of either the use position or the stowed position. The locking mechanism is housed within the tray assembly such that the mechanism is not visible or accessible by an occupant, but rather remotely actuated by a handle or lever. The support member, tray member, and locking mechanism may be assembled together using integrally formed fasteners such that individual mechanical fasteners are not required. In one exemplary embodiment, the support member, tray member, and locking mechanism are snap-fit together using a tab/slot arrangement.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

The drawings described herein are for illustration purposes only and are not intended to limit the scope of the present disclosure in any way.

FIG. 1 is a perspective view of a folding tray assembly in accordance with the present teachings;

FIG. 2 is a side view of the tray assembly of FIG. 1 in a use position;

FIG. 3 is a side view of the tray assembly of FIG. 1 in a stowed position;

FIG. 4 is a perspective view of a tray assembly in accordance with the principles of the present teachings, with part of a housing removed to show an actuation and locking mechanism;

FIG. 5 is a perspective view of the actuation and locking mechanism of FIG. 4 in a locked position;

FIG. 6 is an exploded view of the seat tray assembly of FIG. 4;

FIG. 7 is a top view of the tray assembly of FIG. 4 showing the locking mechanism and actuation mechanism in a locked position;

FIG. 8 is a detailed perspective view of a portion of the actuation mechanism and locking mechanism of FIG. 4;

FIG. 9 is a perspective view of the actuation mechanism of FIG. 4;

FIG. 10 is a perspective view of the actuation and locking mechanism of FIG. 4 in an unlocked position;

FIG. 11 is a perspective view of another tray assembly in accordance with the principles of the present teachings;

FIG. 12 is an exploded view of the tray assembly of FIG. 11;

FIG. 13 is a perspective view of the tray assembly of FIG. 11 showing the locking mechanism and actuation mechanism in a locked position;

FIG. 14 is a perspective view of the tray assembly of FIG. 11 showing the actuation mechanism and locking mechanism in an unlocked position;

FIG. 15 is a perspective view of another tray assembly in accordance with the principles of the present teachings in a use position;

FIG. 16 is an end view of the tray assembly of FIG. 15 showing an actuation mechanism and locking mechanism;

FIG. 17 is a plan view of the tray assembly of FIG. 15 with part of the housing removed to show an actuation mechanism and locking mechanism;

FIG. 18 is a perspective view of another folding tray assembly in accordance with the present teachings;

FIG. 19 is an exploded view of the tray assembly of FIG. 18;

FIG. 20 is a perspective view showing a tray member having a series of integrally-formed attachment tabs;

FIG. 21 is a perspective view of a tray member having a series of slots for receiving the attachment tabs of FIG. 20;

FIG. 22 is a perspective view of a tab of a first tray member attached to a slot of a second tray member to fix the first tray member to the second tray member;

FIG. 23 is a perspective view of an actuation handle disposed within a tray member and a release cable attached to the actuation handle and supported by ribs of the tray member;

FIG. 24 is a top view of the actuation handle attachment location of FIG. 23;

FIG. 25 is a perspective view of a tray member showing a detail of an actuation handle attachment location;

FIG. 26 is a perspective view of the actuation handle attachment location of FIG. 23 showing an actuation handle assembled thereto;

FIG. 27 is a perspective view of an actuation handle of the tray assembly of FIG. 18;

FIG. 28 a perspective view of an actuation handle attached to a tray member;

FIG. 29 is an exploded view of a reinforcement bracket and a portion of a tray member of the tray assembly of FIG. 18 detailing a series of receptacles that receive the tray member to selectively fix the tray assembly of FIG. 18 to the reinforcement bracket;

FIG. 30 is a top perspective view of a tray member of the tray assembly of FIG. 18 incorporating the reinforcement bracket of FIG. 29;

FIG. 31 is a bottom perspective view of a tray member of the tray assembly of FIG. 18 incorporating the reinforcement bracket of FIG. 29;

FIG. 32 is a sectional view of the assembly of FIG. 30 taken along line A-A;

FIG. 33 is a sectional view of the assembly of FIG. 30 taken along line B-B;

FIG. 34 is a perspective view of a support plate detailing a lock post that selectively holds the tray assembly of FIG. 18 in a stowed position;

FIG. 35 is a perspective view of the lock post of FIG. 34 having a portion of a tray member seated therein;

FIG. 36 is a sectional view of the lock post of FIG. 34 having a portion of a tray member seated therein;

FIG. 37 is a perspective view of a top tray member of the tray assembly of FIG. 18 detailing a series of attachment slots formed around an inner periphery of the storage containers that matingly receive the attachment tabs of a bottom tray member; and

FIG. 38 is a sectional view of the tray assembly of FIG. 18 taken along line C-C of FIG. 18 to detail the attachment of the first and second storage compartment doors to the tray assembly of FIG. 18.

### DETAILED DESCRIPTION

The following description is merely exemplary in nature and is not intended to limit the present disclosure, application, or uses.

With reference to the Figures, a folding tray assembly 10 is provided and includes a tray member 12, a support member or bracket 14, an actuation mechanism 15, and a locking mechanism 16. The tray member 12 is pivotably supported by the support bracket 14, and the actuation mechanism 15 and the locking mechanism 16 cooperate to selectively lock the tray member 12 in one of a stowed position or a use position relative to the support bracket 14.

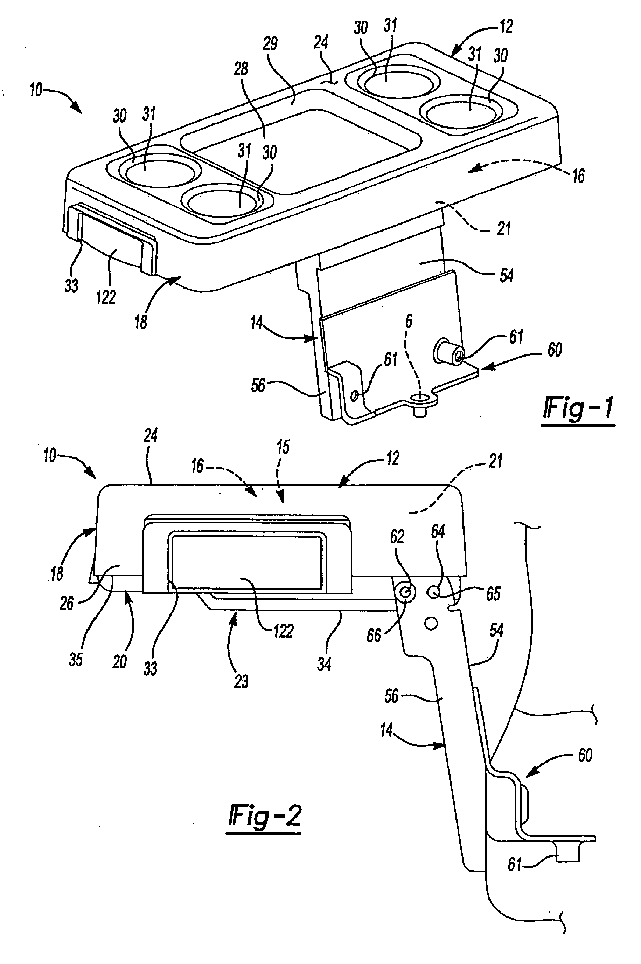

The tray member 12 includes a cover 18, a base 20, and a reinforcement bracket 23. The cover 18 includes a top surface 24 and a first flange 26 extending generally perpendicularly from the top surface 24. The first flange 26 generally surrounds the perimeter of the cover 18 with the exception of a cutout 33 for interaction with the base 20. The top surface 24 includes a central recess 28 and a plurality of cylindrical recesses 30 extending therefrom. The central and cylindrical recesses 28, 30 in the cover 18 define walls 29 and 31, as best shown in FIG. 1. It should be understood that while a central recess 28 and a plurality of cylindrical recesses 30 are disclosed, any recess formed in the cover 18, which generally extends from the top surface 24, is anticipated and should be considered within the scope of the present teachings. The folding tray assembly 10 is preferably of the type as shown in Assignee's U.S. Patent Application No. 10/395,979 filed on March 25, 2003, which claims priority to U.S. Provisional Patent Application No. 60/420,004, filed on October 21, 2002, the disclosures of which are hereby incorporated herein by reference.

In use, the central and cylindrical recesses 28, 30 provide a receptacle for an occupant to store items on the top surface 24 of the cover 18, such as a beverage or a pair of sunglasses (neither shown) due to the relationship between the central and cylindrical recesses 28, 30 and the top surface 24. Specifically, an item placed in either the central or cylindrical recesses 28, 30 is restricted from sliding off of the top surface 24 of the cover 18 by the walls 29, 31. The walls 29, 31 act to restrict the movement of the item relative the top surface 24 and, thus, prevent items from sliding off the cover 18. To that end, the central recess 28 and cylindrical recesses 30 may be optionally provided with a rubber insert or grommet (neither shown) to further secure items disposed in either the central or cylindrical recesses 28, 30.

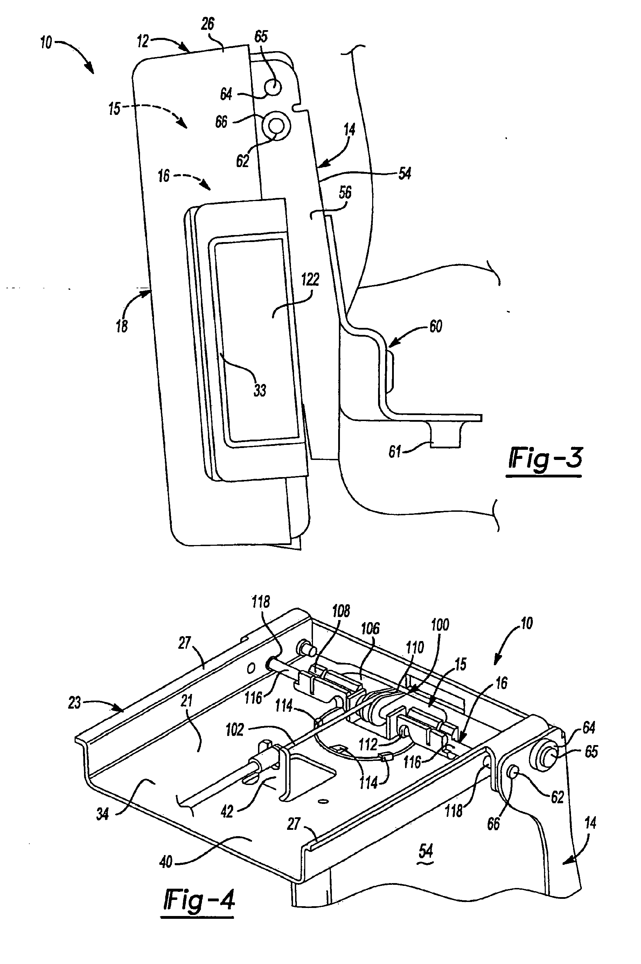

The reinforcement bracket 23 is fixedly attached to the base 20 and includes a bottom surface 34, a second flange 27, and a handle cutout 40. The bottom surface 34 extends generally across the reinforcement bracket 23 and may include a series of strengthening ribs (not shown) and a series of projections 42, as best shown in FIG. 4. The projections 42 extend away from the bottom surface 34 and receive the actuation mechanism 15 and locking mechanism 16. The second flange 27 similarly extends away from the bottom surface 34 and axially surrounds a portion of the bottom surface 34.

The cover 18 is fixedly attached to the reinforcement bracket 23 via the base 20. The first flange 26 may axially surround a second flange 35 of the base 20 to fixedly attach the cover 18 to the base 20 such that the cover 18 overlaps the base 20 (i.e., due to the relationship of the first flange 26 to the second flange 35). The cover 18 may be fixedly attached to the base 20 through frictional engagement between an inner surface of the first flange 26 and an outer surface of the second flange 35 and may be supplemented by a suitable means such as epoxy or glue.

In one embodiment, the cover 18 is formed from a plastic material and the base 20 is formed from a metal material such as steel, whereby the foregoing attachment methods adequately secure the cover 18 to the base 20. In the event the cover 18 is formed from steel and the base is similarly formed from steel, the cover 18 may also be welded to the base 20 in addition to the methods discussed above. In either construction described above, the base 20 and the cover 18 may be fixedly attached through the use of mechanical fasteners.

In fixedly attaching the cover 18 to the base 20, an interior space 21 is created therebetween. The interior space 21 is provided such that the actuation mechanism 15 and the locking mechanism 16 are allowed to freely operate between the cover 18 and the base 20 generally within the interior space. The general shape and depth of the interior space 21 is governed by the length of the first and second flanges 26, 35. Specifically, because the second flange 35 contacts a bottom surface of the cover 18 when assembled, the length of the second flange 35 generally defines the distance between the bottom surface 34 of the base 20 and the top surface 24 of the cover 18. In so doing, the relationship of the second flange 35 to the cover 18 generally defines the volume of the interior space 21. For example, the farther the second flange 35 extends from the bottom surface 34, the greater the interior space 21 formed between the cover 18 and the base 20.

The interior space 21 allows the working components of the tray assembly 10 to be enclosed within the tray member 12 such that exterior moving links or supports are not exposed outside of the tray member 12. The locking mechanism 16 is disposed within the interior space 21, and selectively engages the support bracket 14 through clearances provided in the base 20 and/or reinforcement bracket 23. The locking mechanism 16 is toggled between a locked state and an unlocked state through operation of the actuation mechanism 15, which is disposed generally within the interior space 21. In this manner, the actuation mechanism 15 and the locking mechanism 16 are not exposed. In addition, exterior support brackets extending between the support bracket 14 and the tray member 12 are not required as the tray member 12 is supported by the rigid reinforcement bracket 23 in cooperation with the support bracket 14.

By enclosing the actuation mechanism 15 and the locking mechanism 16 within the interior space 21, and further, by providing support for the tray member 12 through interaction between the rigid reinforcement bracket 23 and the support bracket 14, external supports or linkages are not visible when the tray member 12 in the use position. Generally speaking, the interior space 21, in combination with the rigid reinforcement bracket 23, allow the tray member 12 and support bracket 14 to have a generally L-shape in the use position, thereby providing an open area directly under the tray member 12 (FIG. 2). In this manner, the overall aesthetics of the tray assembly 10 are improved through the cooperation between tray member 12 and support bracket 14.

The support bracket 14 includes a generally planar body 54 and a pair of side supports 56. The planar body 54 includes a pair of attachment apertures 58 that receive a pair of fasteners 59 to either directly attach the support bracket 14 to a structure or, alternatively, attach the support bracket 14 to a second mounting bracket 60 (FIGS. 2 and 3). The second mounting bracket 60 adapts to the particular application of the folding tray assembly 10 such that a common support bracket 14 may be used for a plurality of applications. Specifically, the second mounting bracket 60 adapts to the varying structures to which the folding tray assembly 10 may be attached by providing a plurality of different mounting apertures in varying locations. To this end, the second mounting bracket 60 generally includes a plurality of attachment apertures 61 disposed in different areas of the second mounting bracket 60. The support bracket 14 may remain common over a range of applications, requiring only the second mounting bracket 60 to be modified, thereby reducing tooling and engineering expenditures.

The side supports 56 extend from the planar body 54 and include a first attachment aperture 62 and a second attachment aperture 64. The first attachment aperture 62 may include a collar 66 having a tapered surface for interaction with the locking mechanism 16. The second attachment aperture 64 receives a pin 65 for pivotal attachment to the reinforcement bracket 23 such that the tray 12 rotates relative the support bracket 14 about the pin 65.

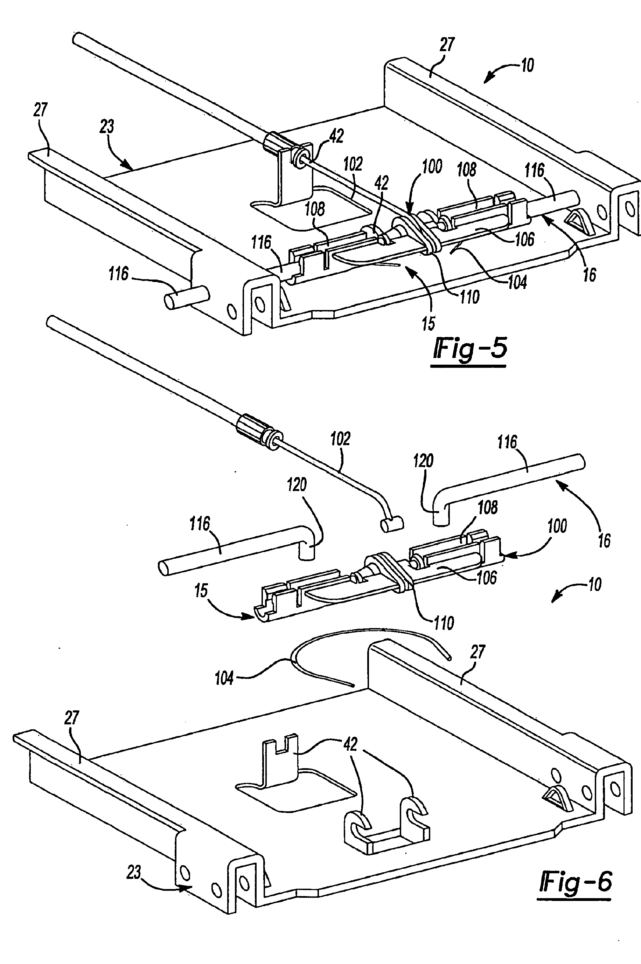

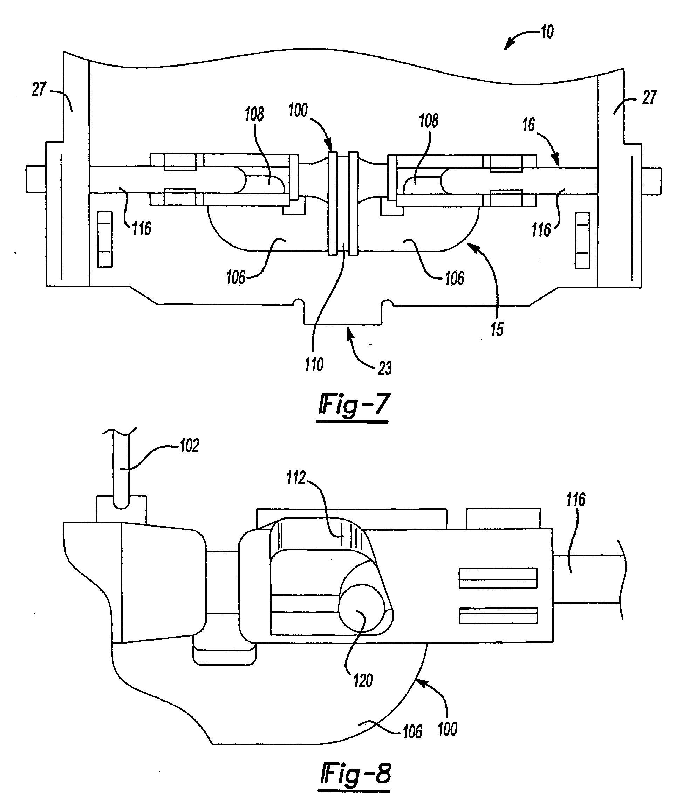

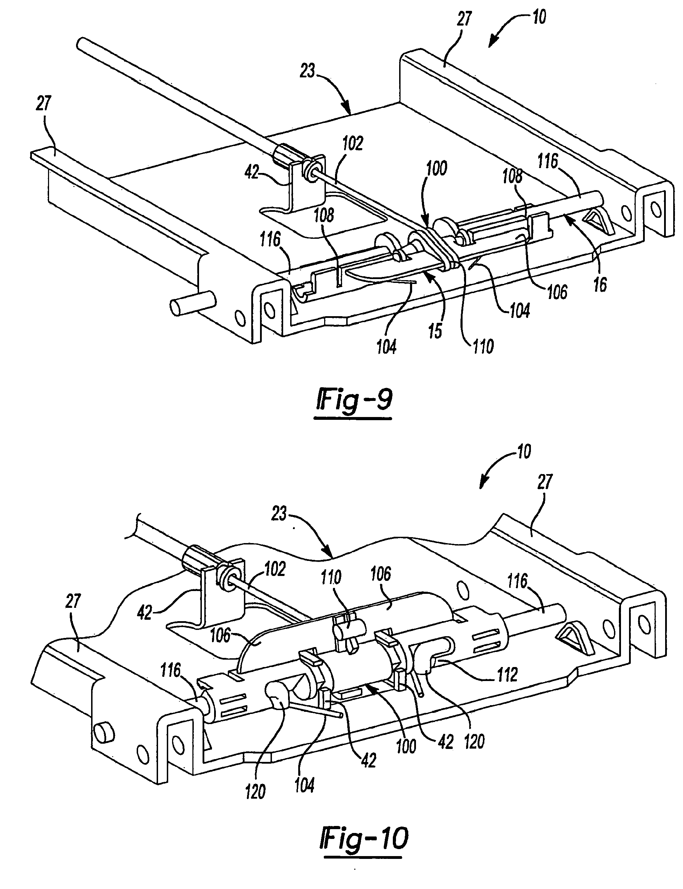

With particular reference to FIGS. 4-10, the actuation mechanism 15, is shown to include an actuation arm 100, an actuation cable 102, and a biasing member 104. The actuation arm 100 is rotatably supported by the reinforcement bracket 23 generally at projections 42. The actuation arm 100 is able to rotate relative to the reinforcement bracket 23, about projections 42. The actuation arm 100 includes a lever arm 106, a pair of channels 108, a cable seat 110, and a pair of cam surfaces 112.

The actuation cable 102 is connected to the cable seat 110 of the actuation arm 100 at a first end and is supported by the reinforcement bracket 23 generally at projection 42, as best shown in FIG. 4. The biasing member 104 is supported generally by the reinforcement bracket 23 at projections 114 to constrain and position the biasing member 104 relative to the locking mechanism 16.

The locking mechanism 16 includes a pair of pins 116 that are slidably received within a pair of apertures 118 formed in the second flanges 27 and within the channel 108 of the actuation arm 100. The lock pins 116 are positioned relative to the actuation arm 100 such that a leg 120 of each pin 116 is in slidable engagement with a pair of cam surfaces 112.

The lock pins 116 extend through aperture 118 of the second flanges 27 and selectively engage aperture 62 of the support bracket 14 to lock the tray member 12 in the use position. Each lock pin 116 is biased into engagement with aperture 62 of the support bracket 14 by the biasing member 104.

With particular reference to FIGS. 4-10, operation of the tray assembly 10 will be described in detail. When the tray is in the use position, as shown in FIG. 2, the tray member 12 is restricted from rotating relative to the support bracket 14 due to the engagement between the lock pins 116 and aperture 62. To rotate the tray member 12 relative to the support bracket 14, the lock pins 116 must first be removed from engagement with aperture 62.

To remove the lock pins 116 from engagement with aperture 62 of the support bracket 14, a force must first be applied generally to the actuation cable 102. The force applied to the actuation cable 102 may be transmitted to the actuation cable 102 by way of an actuation handle 122. The applied force causes the handle 122 to rotate relative to the tray member 12 and apply a tensile force to the actuation cable 102.

Sufficient rotation of the actuation handle 122 relative to the tray member 12 causes the actuation cable 102 to transmit the applied force to the actuation cam 100. The force causes the actuation arm 100 to rotate relative to the reinforcement bracket 23 about projections 42. Rotation of the actuation arm 100 relative to the reinforcement bracket 23, causes the legs 120 of each pin 116 to move along the cam surfaces 112 of the actuation arm 100.

The cam surfaces 112 of the actuation arm 100 are designed such that when the actuation arm 100 is rotated, the legs 120 of each pin 116 are caused to move from a first end of the cam surface 112 to a second end of the cam surface 112. Movement of the legs from the first end of the cam surface 112 to the second end of the cam surface 112 causes each pin 116 to be retracted from engagement with aperture 62 of the support bracket 14.

Rotation of the tray member 12 relative to the support bracket 14 is permitted once the lock pins 116 have been positioned sufficiently within the interior space 21 of the tray member 12. As the tray member 12 is rotated from the use position, the lock pins 116 move from alignment with apertures 62. At this point, the force applied to the actuation handle 122 may be released. Upon release of the force applied to the actuation handle 122, the biasing member 104 again biases each pin 116 generally towards aperture 62. However, as the tray member 12 has been rotated sufficiently relative to the support bracket 14, the lock pins 116 are not able to engage aperture 62 of the support bracket 14.

Once the tray member 12 has been sufficiently rotated from the use position, such that the tray member 12 is positioned generally parallel to the support bracket 14, the tray member 12 is considered in the stowed position. The tray member 12 may be locked in the stowed position by engagement of the lock pins 116 with an aperture (not shown) formed in the support bracket 14. Alternatively, the tray member 12 may not be locked in the stowed position, but rather, may simply be positioned adjacent to the support bracket 14. As such, the tray member 12 is free to rotate back to the use position.

To return the tray member 12 to the use position (i.e., such that the tray member 12 is generally perpendicular to the support bracket 14), a force must once again be applied to the actuation handle 122 if the tray member 12 is locked in the stowed position. Upon sufficient rotation of the actuation handle 122, the actuation cable 102 applies force to the actuation arm 100 to overcome the bias imparted thereon by biasing member 104. Rotation of the actuation arm 100 causes the legs 120 of each lock pin 116 to traverse the cam surfaces 112 of the actuation arm to once again retract the lock pins 116 from engagement with the support bracket 14.

Once the lock pins 116 have been disengaged from the support bracket 14, the force applied to the actuation handle 122 may be released and the tray member 12 may be rotated relative to the support bracket 14 back to the use position. Once the tray member 12 has been sufficiently rotated to the support bracket 14, such that the tray member 12 is generally perpendicular to the support bracket 14, the lock pins 116 will be biased into engagement with aperture 62 due to the force imparted thereon by biasing member 104.

The force applied to the actuation handle 122 is both reduced and held constant due to the relationship between the actuation cable 102, actuation arm 100, and lock pins 116. Specifically, when a force is initially applied to the actuation handle 122, the force to overcome the bias of biasing member 104 is generally at its lowest level. However, the biasing member 104 becomes more compressed as the actuation handle 122 is rotated further. The compression of the biasing member 104 exerts more resistance on the lock pins 116, and thus increases the efforts required to rotate the actuation handle 122. The additional effort imparted by the compressed biasing member 104 are generally overcome by the relationship between the lever arm 106 and the actuation cable 102.

For example, when the biasing member 104 begins to impart a greater force on the actuation handle 122, the additional force is overcome due to the lever arm 106 being cantilevered away from the axis of rotation of the actuation arm 100. In other words, the lever arm 106 acts as a moment arm and relieves the effort required to rotate the actuation arm 100.

If the lever arm 106 is not able to sufficiently alleviate the forces associated with the compressed biasing member 104, the cam surfaces 12 may be re-designed to offer a more gradual slope. In so doing, the efforts required to traverse the lock pins 116 between the first and second ends of the cam surfaces 112 is reduced. A constant and consistent force may be applied to the actuation handle 122 to release the lock pins 116 from engagement with aperture 62 due to the cooperation between the lever arm 106 and cam slot 112.

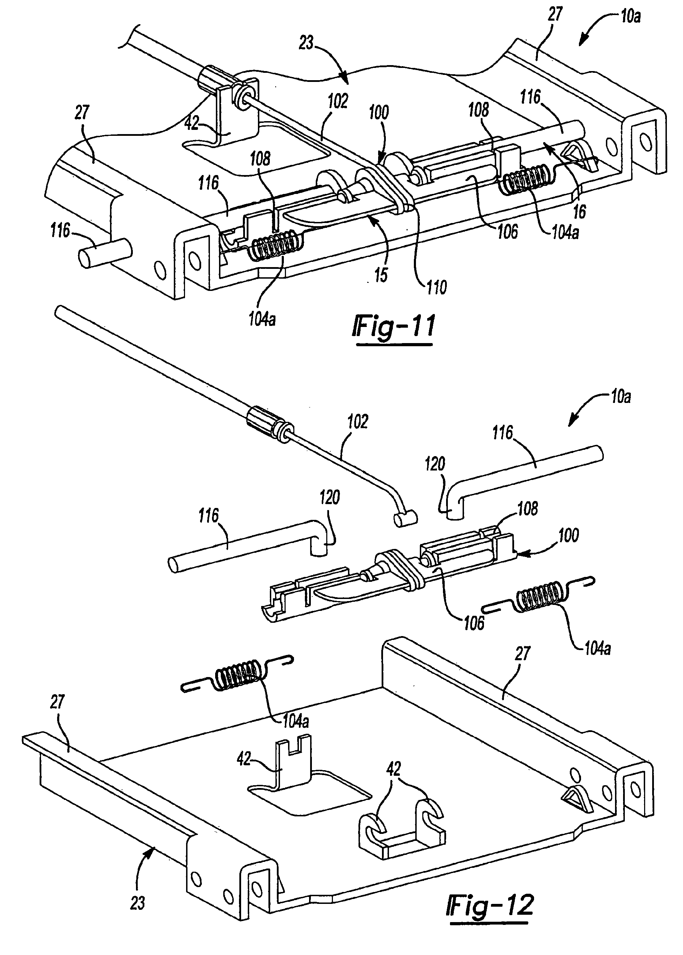

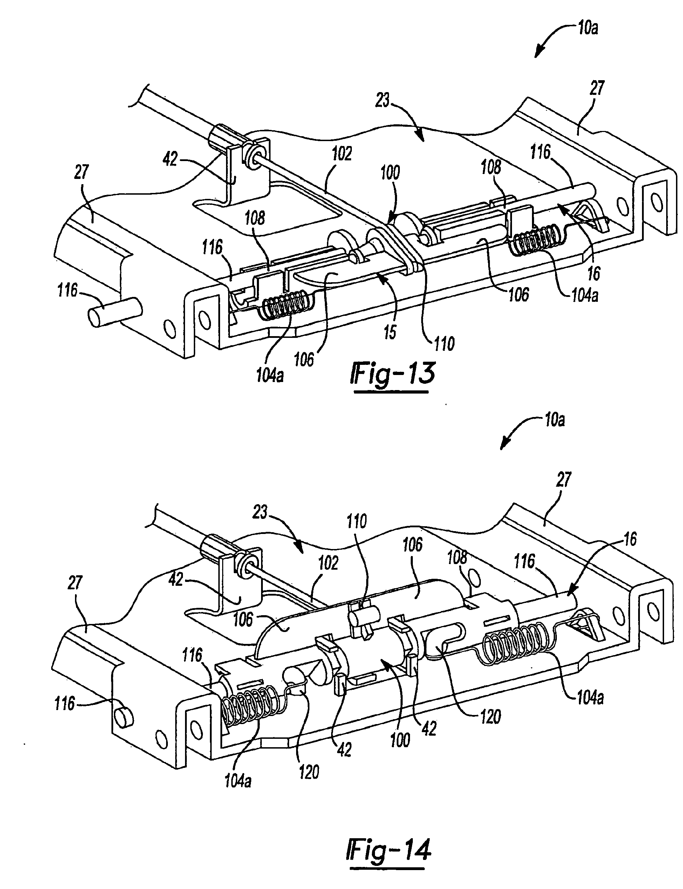

With reference to FIGS. 11-14, another folding tray assembly 10a is provided. In view of the substantial similarity and structure and function of the components associated with the folding tray assembly 10 with respect to the folding tray assembly 10a, like reference numerals are used hereinafter in the drawings to identify like components while like reference numerals containing letter extensions are used to identify those components that have been modified.

The folding tray assembly 10a includes the actuation mechanism 15 as well as a locking mechanism 16. The actuation mechanism 15 works with the locking mechanism 16 to selectively release the locking pin 116 from engagement with aperture 62 of the support bracket 14. The lock pins 116 are biased into engagement with aperture 62 of the support bracket 14 by a pair of biasing members 104a.

Biasing members 104a include a generally coiled body and are fixed at one end to the legs 120 of the lock pins 116 and are fixed to the base 20 at a second end. The biasing members 104a bias the lock pins 116 into engagement with the aperture 62 of the support bracket 14.

In operation, the folding tray assembly 10a functions in a similar manner as folding tray assembly 10a. Folding tray assembly 10a is released from engagement with the support bracket 14 by applying a force to the actuation handle 122. Rotation of the actuation handle 122 causes the actuation cable 102 to be placed under tension. Once the actuation cable 102 is placed under sufficient tension, the actuation arm 100 begins to rotate relative to the reinforcement bracket 23 and against the force imparted thereon by biasing members 104a.

Sufficient rotation of the actuation arm 100 causes the legs 120 of the lock pins 116 to travel from the first end of the cam surfaces 112 to the second end of the cam surfaces 112 and retract to a position generally inside the tray member 12. At this point, as previously discussed with respect to folding tray assembly 10, the tray member 12 may be positionable relative to the support bracket 14. In other words, the tray member 12 is freely rotatable relative to the support bracket 14 and can be moved from the use position to the stowed position.

To return the tray member 12 to the use position a force is again applied to the actuation handle 122, to place the actuation cable 102 under tension. Once the actuation cable 102 is under sufficient tension, the actuation arm 100 rotates relative to the reinforcement bracket 23 against the bias imparted thereon by biasing members 104a. Upon sufficient rotation of the actuation arm 100, the legs 120 of each pin 116 move from the second end of cam surface 112 to the first end of cam surface 112 and once again extend from the second flanges 27 of the reinforcement bracket 23.

Upon sufficient rotation of the tray member 12 from the stowed position to the use position, the lock pins 116 may engage aperture 62 of the support bracket 14 and lock the tray member 12 in the use position and prevent further rotation of the tray member 12 relative to the support bracket 14. As noted above, the tray member 12 may not be locked in the stored position and may be freely rotated back into the use position. However, if the tray member 12 is locked in the stowed position, a force must first be applied to the actuation handle 122 prior to returning the tray member 12 to the use position.

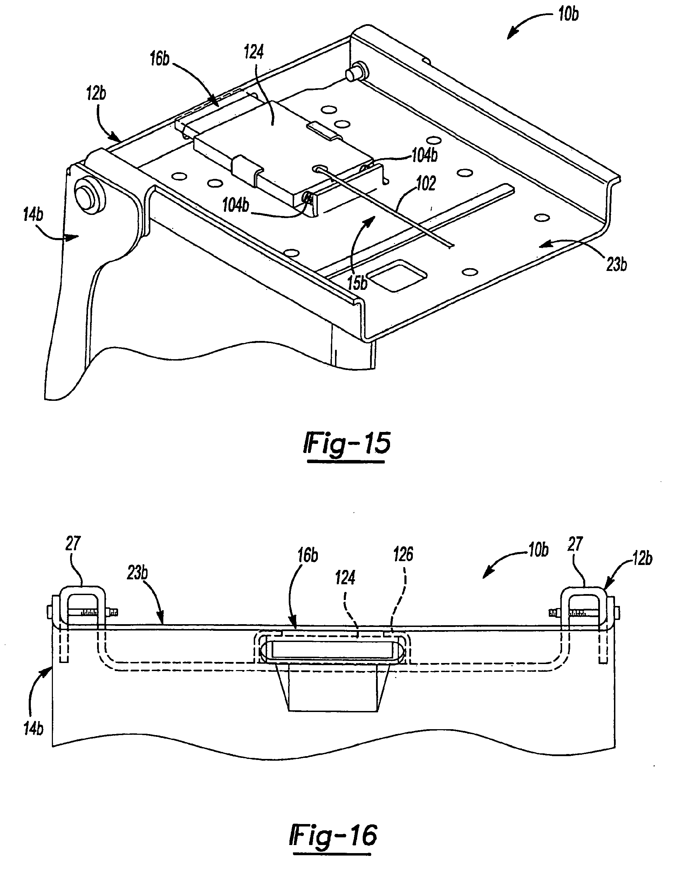

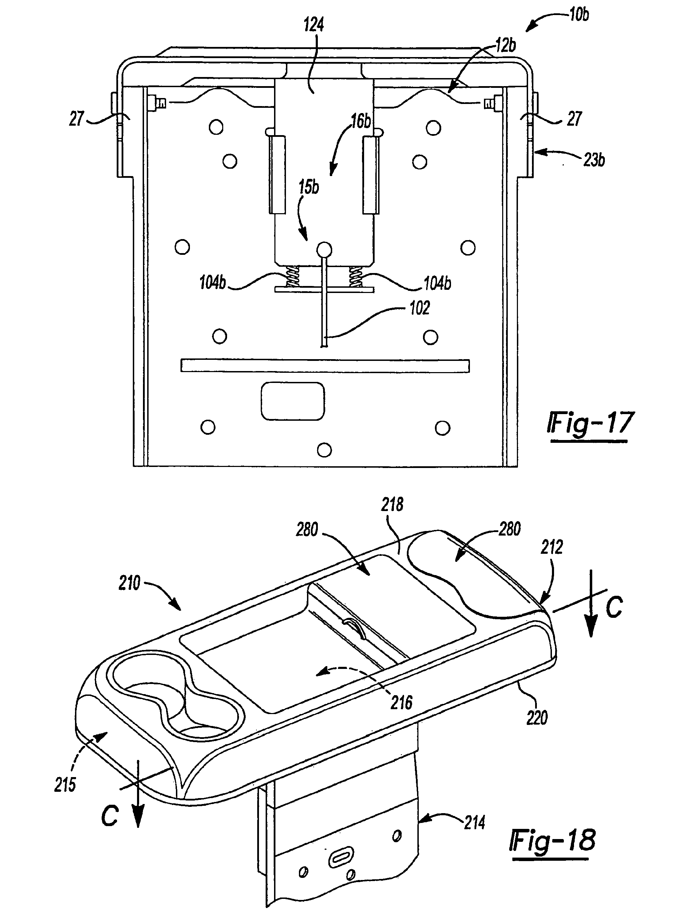

With particular reference to FIGS. 15-17, another folding tray assembly 10b is shown. In view of the substantial similarity and structure and function of the components associated with the folding tray assembly 10. With respect to the folding assembly 10b, like reference numerals are used hereinafter in the drawings to identify like components while like reference numerals containing letter extensions are used to identify those components that have been modified.

The folding tray assembly 10b includes an actuation mechanism 15b and a locking mechanism 16b. The actuation mechanism 15b generally includes an actuation handle 122 operably connected to an actuation cable 102. The locking mechanism 16b includes a locking plate slidably supported by reinforcement bracket 23b. The locking plate 124 is biased into engagement with the support bracket 14 by a pair of biasing members 104b.

In operation, the locking mechanism 16b selectively holds the tray member 12b in one of a use position and a stowed position. In the use position, the locking plate 124 extends generally from the tray member 12b and engages a slot 126 formed in the support bracket 14 (FIGS. 15 and 16). Engagement between the locking plate 124 and the slot 126 prevents rotation of the tray member 12b relative to the support bracket 14.

To rotate the tray member 12b relative to the support bracket 14, a force is applied to the actuation handle 122 to impart a tensile force on the actuation cable 102. Once a sufficient force is applied to the actuation cable 102, the locking plate 124 translates relative to the reinforcement bracket 23b and against the force imparted thereon by biasing members 104b. Once the locking plate 124 has been sufficiently translated along the reinforcement bracket 23b, the locking plate 124 disengages the slot 126 of the support bracket 14.

Rotation of the tray member 12b relative to the support bracket 14 is permitted once the locking plate 124 is sufficiently disengaged from the slot 126 of the support bracket 14. At this point, the tray member 12 may be rotated from the use position (i.e., generally perpendicular to the support bracket 14) to a stowed position (i.e., generally parallel to the support bracket 14).

In any of the foregoing folding tray assemblies 10, 10a, 10b, it should be understood that the respective actuation mechanisms 15, 15b, and respective locking mechanisms 16, 16a, 16b, are generally housed within the respective tray member 12, 12b. In this regard, locking of the respective tray member 12, 12b is accomplished through mechanisms contained generally within the tray member 12, 12b.

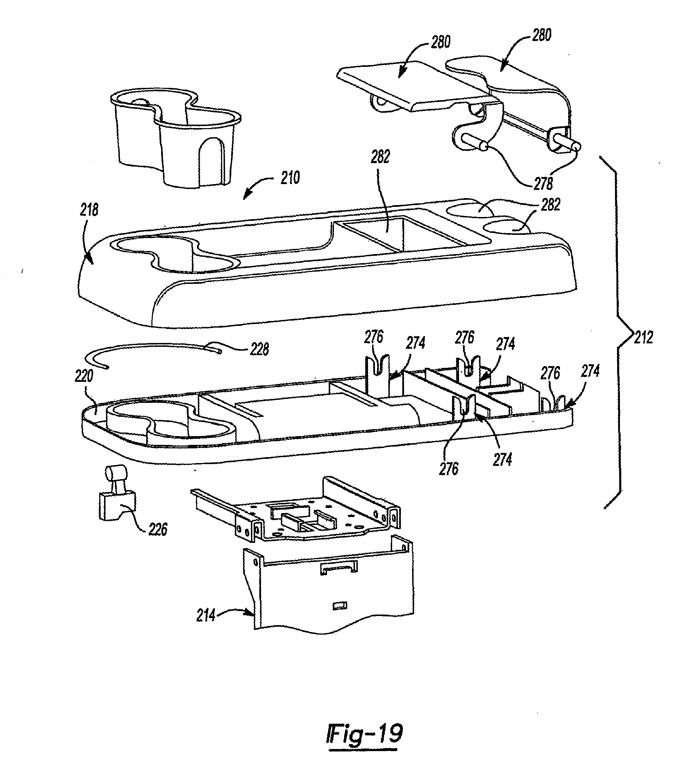

With reference to FIGS. 18 and 19, a folding tray assembly 210 is provided and includes a tray member 212, a support member or bracket 214, an actuation mechanism 215, and a locking mechanism 216. The support member 214 pivotally supports the tray member 212 between a use position and a stowed position. The actuation mechanism 215 and the locking mechanism 216 cooperate to selectively lock the tray member 212 in one of the stowed position or the use position relative to the support member 214. The tray assembly 210 is preferably of the type disclosed in Assignee's commonly-owned U.S. Patent No. 6,877,806, Assignee's commonly-owned U.S. Patent Application No. 11/062,327, filed on February 18, 2005, and Assignee's commonly-owned U.S. Provisional Patent Application No. 60/661,317, filed on March 11, 2005, the disclosures of which are hereby incorporated by reference.

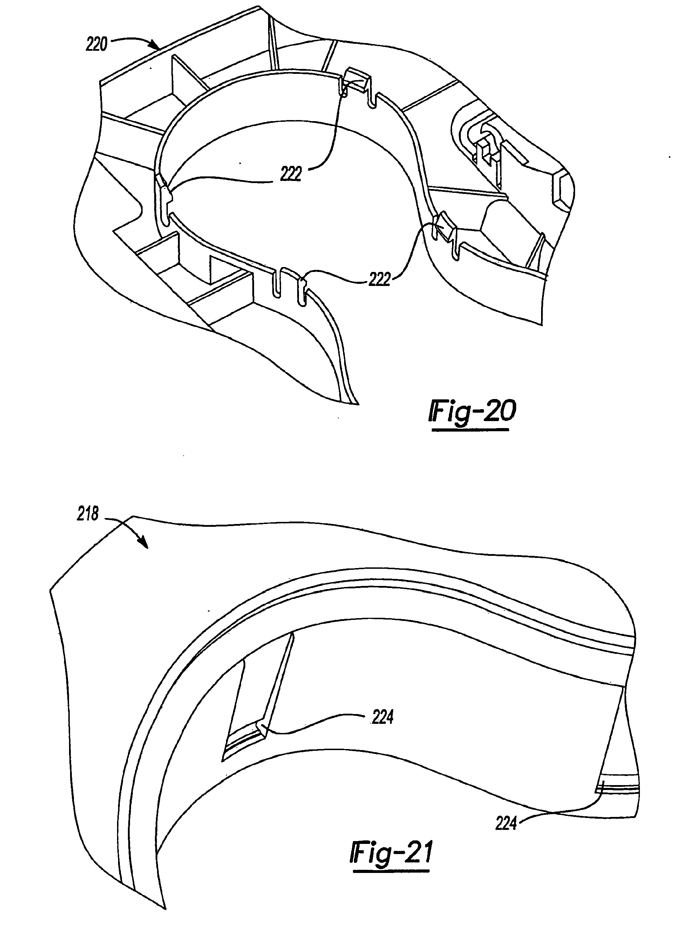

The tray member 212 includes a first tray member (upper tray member) 218 and a second tray member (lower tray member) 220. The first tray member 218 includes a series of slots 224 while the second tray member 220 includes a series of tabs 222 that are matingly received within the slots 224 of the first tray member 218. Engagement between the slots 224 of the first tray member 218 and the tabs 222 of the second tray member 220 fix the first tray member 218 to the second tray member 220 (FIGS. 20-22). Such a configuration results in a "snap-fit" between the first tray member 218 and the second tray member 220 and therefore obviates the need for individual mechanical fasteners such as screws, bolts, nuts, clips, etc.

It should be understood that while the first tray member 218 is described as including slots 224 and the second tray member 220 is described as including tabs 222, that the first tray member 218 could alternatively include tabs 222 and the second tray member 220 could include slots 224. Furthermore, it should be understood that the first tray member 218 and second tray member 220 could each include at least one tab 222 and at least one slot 224.

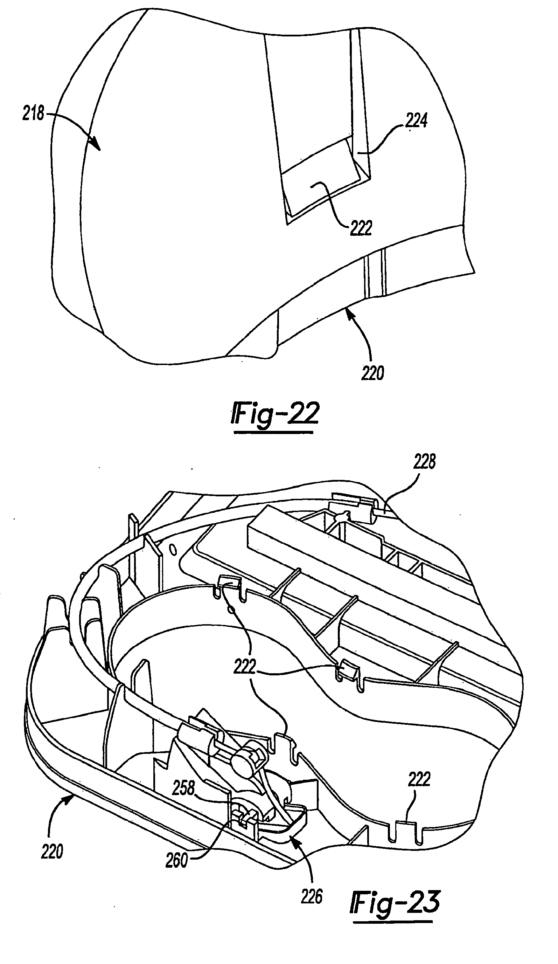

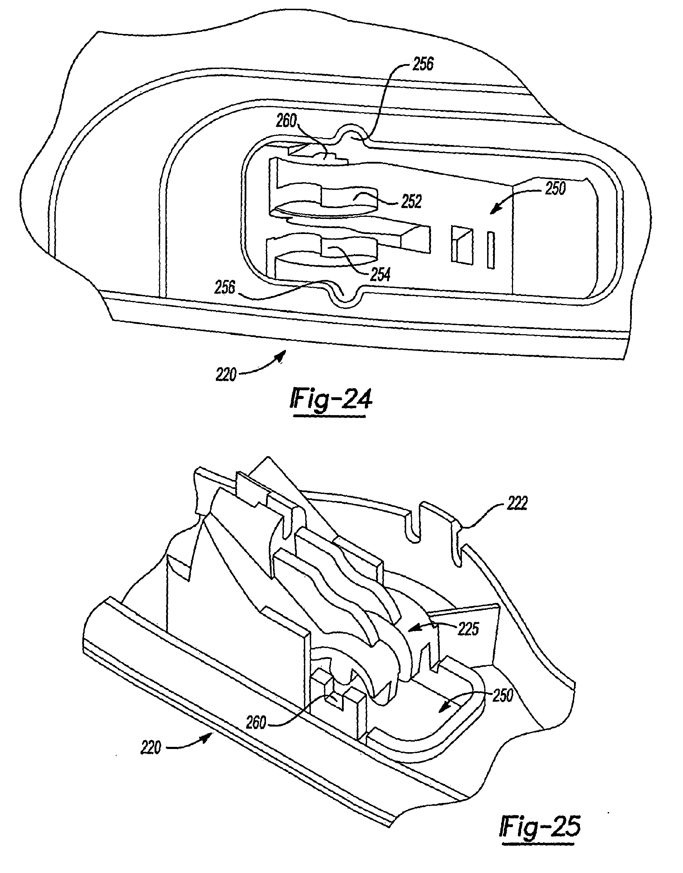

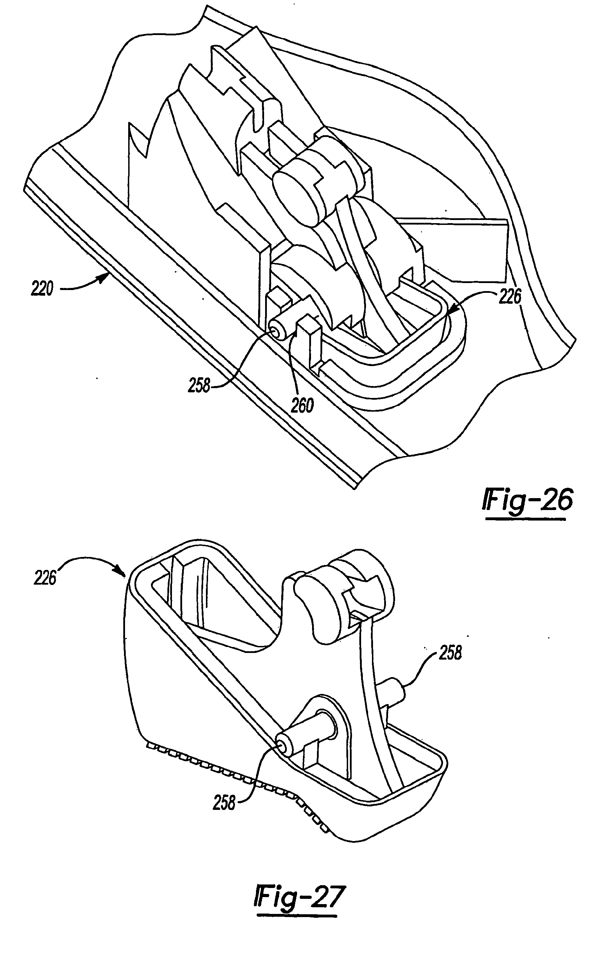

With particular reference to FIGS. 23-28, the actuation mechanism 215 includes an actuation handle 226 that is rotatably supported generally between the first tray member 218 and the second tray member 220. The actuation handle 226 is snap-fit to the second tray member 220 and therefore obviates the need for individual mechanical fasteners to rotatably attach the actuation handle 226 to the tray member 212. The actuation handle 226 is coupled to a cable 228 for use in toggling the locking mechanism 16 between a locked state and an unlocked state.

The second tray member 220 includes a recess 250 for matingly receiving the actuation handle 226. The recess 250 includes a pair of generally U-shaped arms 252 defining a pair of slots 254. In addition, the recess 250 includes a pair of cutouts 256 for allowing the actuation handle 226 to be received within the recess 250 and be locked therein.

When the actuation handle 226 is inserted into the second tray member 220, a pair of posts 258 associated with the actuation handle 226 are received by the cutouts 256 and generally are snap-fit into the slots 254. In addition to being received within the slots 254, the posts 258 of the actuation handle 226 are similarly snap-fit into a pair of notches 260 formed adjacent to the recess 250. The notches 260 are generally open in an opposite direction to the opening of the slots 254. Therefore, when the posts 258 of the actuation handle 226 are received within the slots 254 of arms the 252 and within the notches 260, the posts 258 are essentially trapped between the slots 254 and the notches 260. Cooperation between slots 254 and notches 260 prevent removal of the actuation handle 226 from the second tray member 220 and while concurrently permitting rotation of the actuation handle 226 relative to the second tray member 220 about the posts 258.

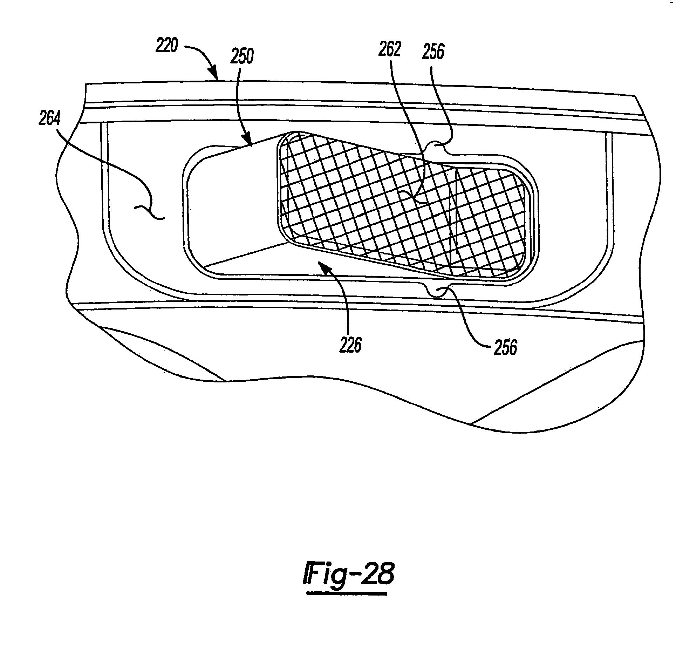

As described, the actuation handle 226 is rotatably supported by the second tray member 220 and is generally received within the recess 250. The actuation handle 226 is shown assembled to the second tray member 220 in FIG. 28 in an unactuated position. When the actuation handle 226 is actuated, a force is applied to the actuation handle 226, thereby rotating the actuation handle 226 relative to the second tray member 220 about posts 258. When the actuation handle 226 is rotated relative to the second tray member 220, a surface 262 of the actuation handle 226 is positioned substantially flush to a surface 264 of the second tray member 220. Therefore, when the actuation handle 226 is toggled from an unactuated state to an actuated state, the handle 226 does not extend from a surface 264 of the second tray member 220, but rather, is depressed such that the actuation handle 226 extends further into an area defined generally between the first tray member 218 and the second tray member 220.

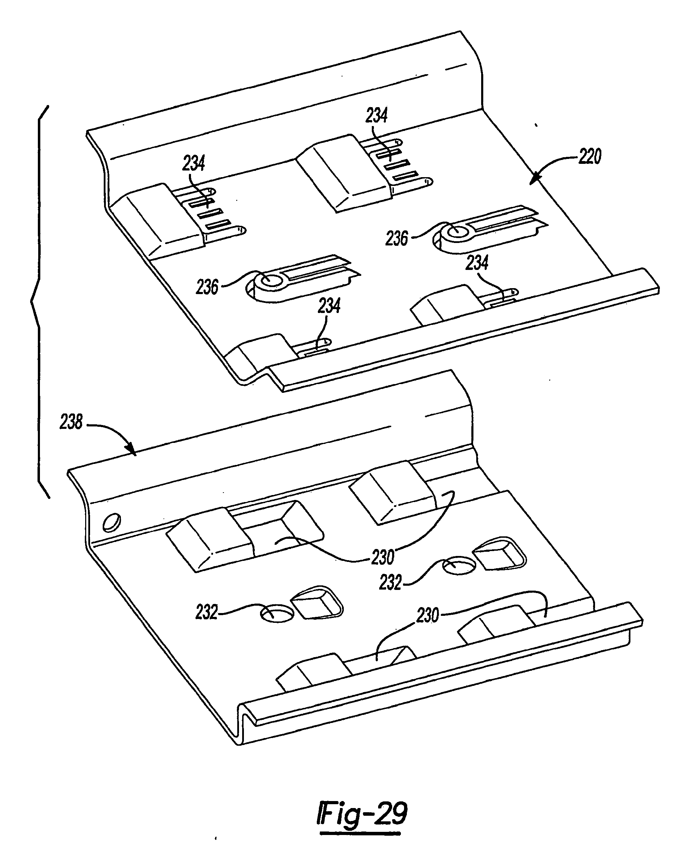

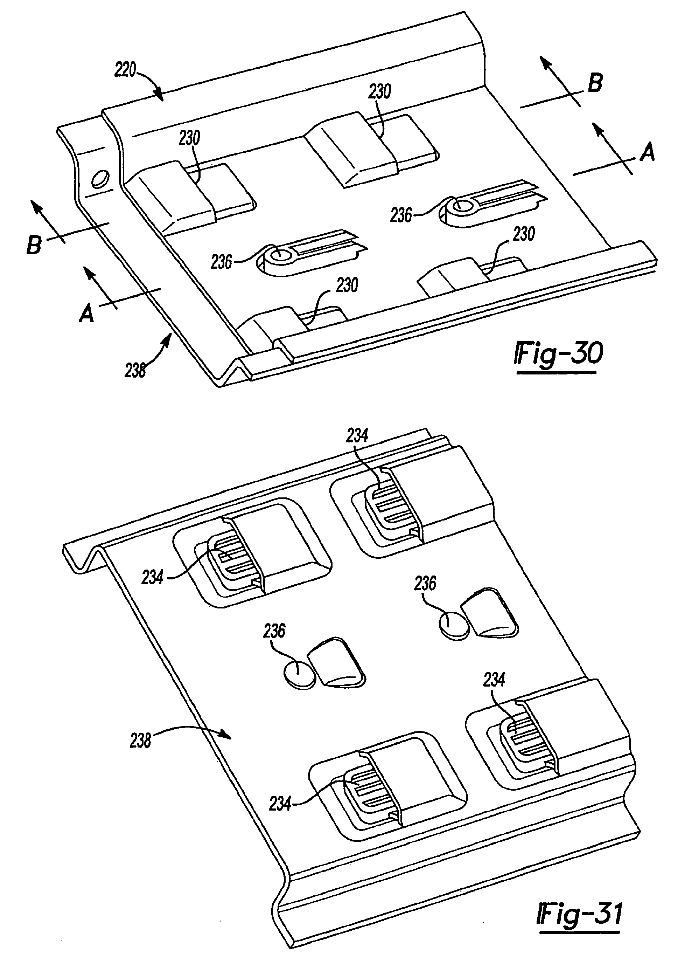

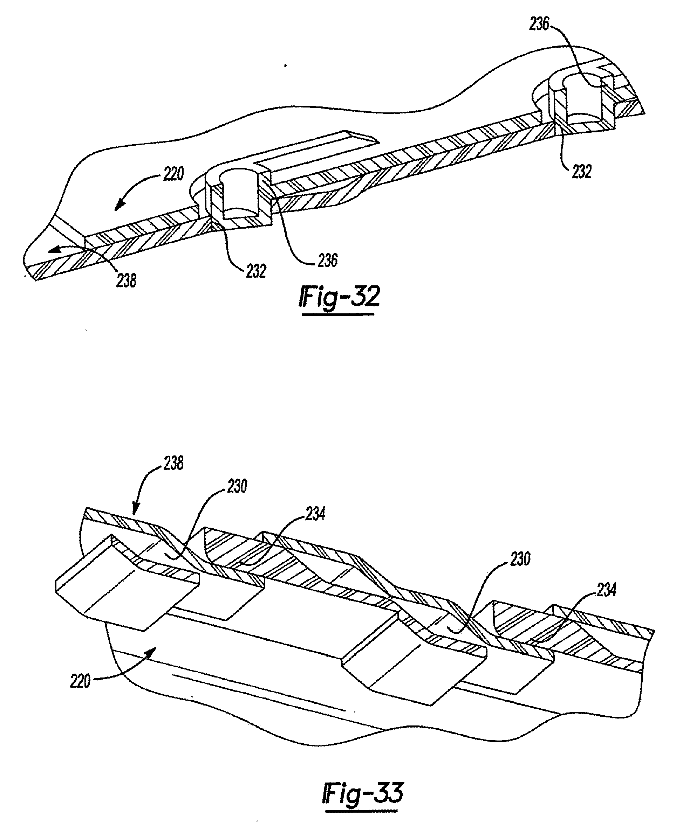

With reference to FIGS. 29-33, a reinforcement bracket 238 may be attached to the second tray member 220 to pivotally attach the second tray member 220 to the support member 214. The reinforcement bracket 238 may include a series of receptacles 230 and a series of attachment apertures 232 to allow the reinforcement bracket 238 to be fixedly attached to the second tray member 220 without using individual mechanical fasteners. While the reinforcement bracket 238 is described as being attached to the second tray member 220, the reinforcement bracket 238 could additionally, or alternatively, be attached to the first tray member 218.

The second tray member 220 may include a series of posts 234 that are slidably received by the receptacles 230 and a series of projections 236 that are matingly received by the attachment apertures 232. It should be understood that while the reinforcement bracket 238 is described as including a series of receptacles 230 and apertures 232 and the second tray member 220 is described as including a series of posts 234 and projections 236, that the reinforcement bracket 238 may alternatively include posts 234 and projections 236 and the second tray member 220 may include receptacles 230 and apertures 232. Furthermore, it should be understood that the reinforcement bracket 238 and second tray member 220 each may include any combination of receptacles 230, apertures 232, posts 234, and projections 236 that allow the reinforcement bracket 238 to be attached to the second ray member 220 without requiring use of individual mechanical fasteners.

Engagement between the posts 234 and the receptacles 230 fixedly attaches the second tray member 220 to the reinforcement bracket 238. Engagement between the projections 236 and the apertures 232 further fixes the second tray member 220 to the reinforcement bracket 238 and prevents relative rotation therebetween. Slidable engagement between the posts 234 and the receptacles 230 and between the projections 236 and the apertures 232 allows the second tray member 220 to be rotatably attached to the support member 214 (i.e., via reinforcement bracket 238) without using individual mechanical fasteners. It should be understood that the second tray member 220 may alternatively be attached to the reinforcement bracket 238 using mechanical fasteners and that the second tray member 220 may be rotatably attached directly to the support member 214.

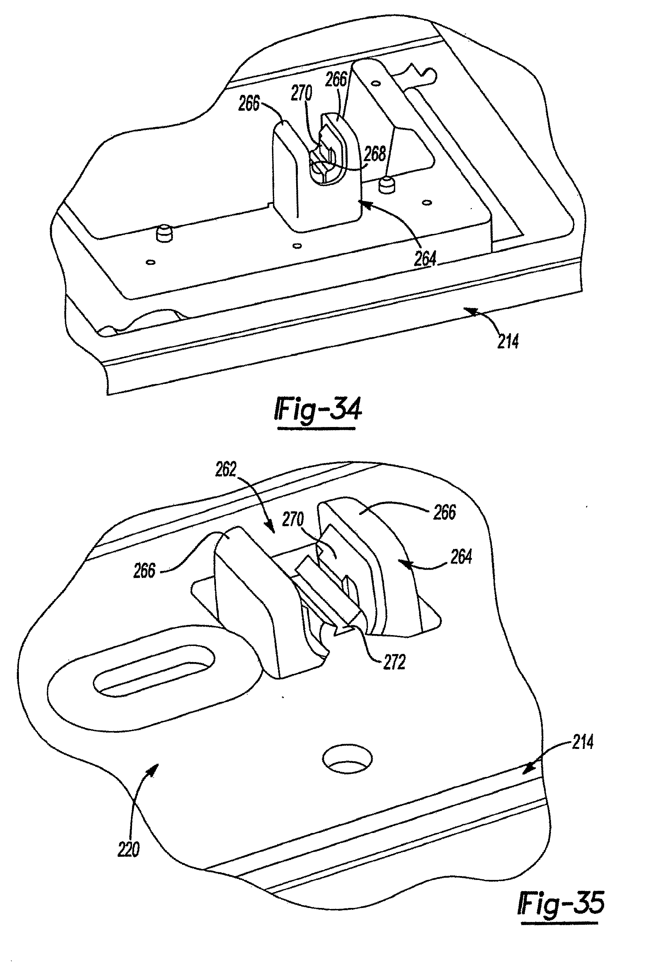

With particular reference to FIGS. 34-36, the tray assembly 210 is shown to include a lock post 264 associated with the support member 214. The lock post 264 includes a pair of upwardly extending arms 266 defining a recess 268 therebetween. Each arm 266 includes a tab 270 extending generally into the recess 268. The tabs 270 are preferably formed from a material having a spring-like quality that biases the tabs 270 into a design position. The material allows the tabs 270 to return to the design position even after being deflected by a force applied thereto.

In operation, when the second tray member 220 is moved from the use position to the stowed position, a post 272 associated with the second tray member 220 is positioned relative to the lock post 264 of the support member 214 such that when the second tray member 220 is moved into the stowed position, the post 272 is received within the recess 268 of the lock post 264. The post 272 engages the tabs 270 and causes the tabs 270 to expand generally away from the recess 268. Because the tabs 270 are formed of a spring-like material, the tabs 270 are able to flex under the pressure exerted thereon by the post 272 without fracturing.

Once the second tray member 220 has been sufficiently moved into the stowed position, the post 272 of the second tray member 220 travels sufficiently within the recess 268 to allow the tabs 270 to spring back to the design position and trap the post 272 within the recess 268 of the lock post 264. In this position, interaction between the post 272 and the tabs 270 of the lock post 264 maintains the tray assembly 210 in a stowed position.

To return the tray assembly 210 to a use position, a force is exerted generally on the tray assembly 210 to rotate the second tray member 220 relative to the support member 214. When a force is applied to the tray assembly 210, the force is transmitted generally to the second tray member 220 and thus, to the post 272. When a sufficient force is applied to the second tray member 220, the post 272 of the second tray member 220 exerts a sufficient force on the tabs 270 to cause the tabs 270 to move generally away from the recess 268. When the opening of the recess 268 has been sufficiently opened through movement of the tabs 270, the post 272 of the second tray member 220 is permitted to travel generally through the recess 268 and past the tabs 270. Once the post 272 has passed through the tabs 270, the post 272 is free to travel out of the recess 268 and disengage the lock post 264 altogether. Once the post 272 has fully disengaged the recess 268 of the lock post 264, the second tray member 220 may be rotated away from the support member 214 and into the use position.

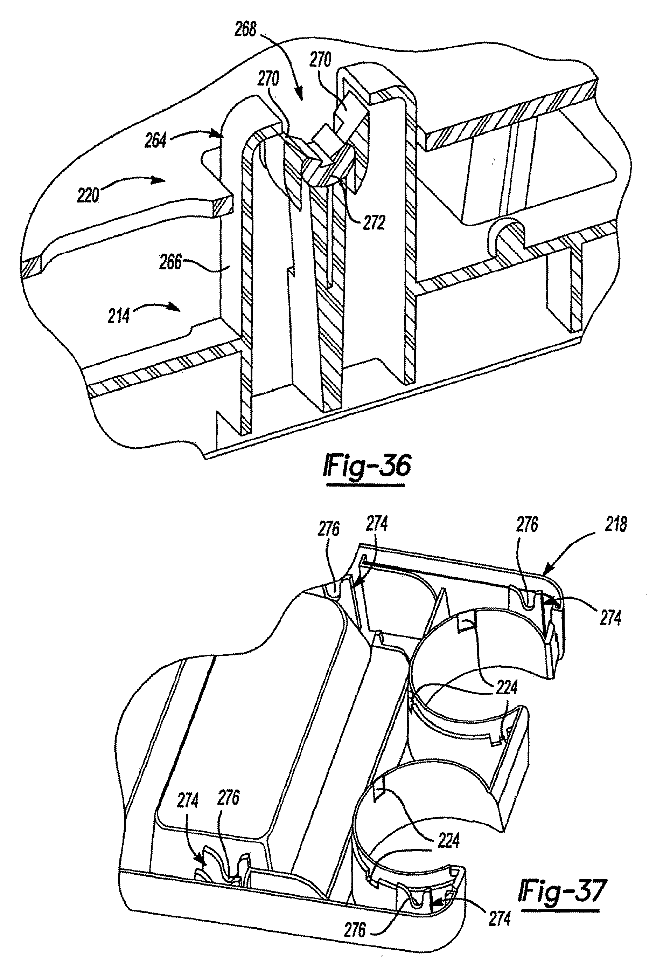

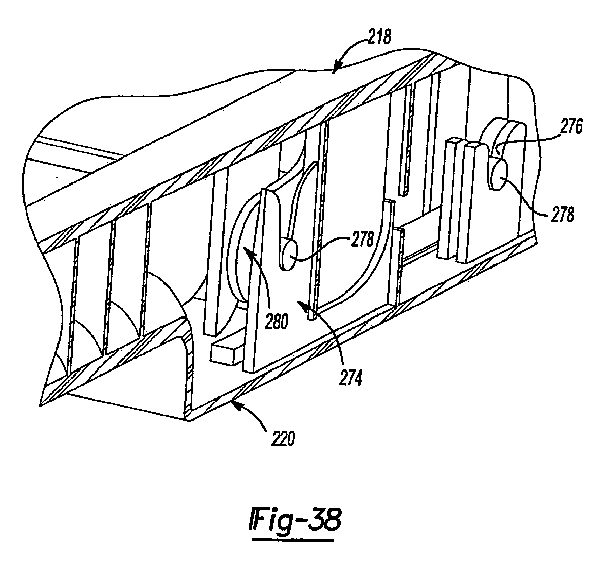

With reference to FIGS. 37 and 38, the tray assembly 210 is shown to include a series of U-shaped arms 274 extending from the upper and lower tray members 218, 220, respectively. The U-shaped arms 274 each include a recess 276 for rotatably receiving at lease one post 278 of a moveable member 280. The moveable member 280 is shown in FIG. 18 as a cover rotatably attached to the tray assembly 210 for selectively concealing a series of receptacles 282 such as a storage container or a cup holder.

The moveable members 280 are rotatably supported by the posts 278 relative to the tray assembly 210. The posts 278 are matingly received generally within the recesses 276 of the U-shaped arms 274. The U-shaped arms 274 are formed from a spring-like material such as plastic such that when the posts 278 are inserted into the recesses 276, the U-shaped arms 274 temporarily expand to allow the posts 278 to be positioned within the recesses 276.

Once the posts 278 are fully received within the recesses 276, the U-shaped arms 274 snap back into a design position and prevent removal of the posts 278 from the recesses 276. In this matter, the posts 278 of the moveable members 280 are essentially snap-fit into the recesses 276 of the U-shaped arms 274 and permit rotation of the moveable member 280 relative to the tray assembly 210 generally about the posts 278.

The tray assembly 210 of the present invention provides a "fastener-less" design that incorporates integrally-formed tabs 222 and slots 224 that cooperate to attach the first tray member 218 to the second tray member 220. Furthermore, the second tray member 220 may be attached to the reinforcement bracket 238 using the receptacles 230, apertures 232, posts 234, and projections 236, as previously discussed, to eliminate individual mechanical fasteners between the tray assembly 210 and the support member 214.

The description of the invention is merely exemplary in nature and, thus, variations that do not depart from the gist of the invention are intended to be within the scope of the invention. Such variations are not to be regarded as a departure from the spirit and scope of the invention.

## Claims

1. A folding tray assembly comprising:
a support bracket;
a tray assembly pivotably supported by said support bracket;
an actuation arm rotatably supported within said tray assembly and including a first cam surface and a second cam surface each having a first end and a second end;
a first pin in slidable engagement with said first cam surface and movable between said first end and said second end, said first pin engaging said support bracket when disposed at said first end of said first cam surface and disengaged from said support bracket when disposed at said second end of said first cam surface;
a second pin in slidable engagement with said second cam surface and movable between said first end and said second end, said second pin engaging said support bracket when disposed at said first end of said second cam surface and disengaged from said support bracket when disposed at said second end of said second cam surface.

2. The folding tray assembly of Claim 1, further comprising at least one biasing member acting on said first pin and at least one biasing member acting on said second pin to respectively bias said first and second pins into said first ends of said first and second cam surfaces.

3. The folding tray assembly of Claim 1, further comprising a cable attached to said actuation arm for selectively rotating said actuation arm relative to said tray assembly.

4. The folding tray assembly of Claim 3, wherein said actuation arm includes an arm extension cantilevered from said actuation arm, said arm extension operably connected to said cable and facilitating rotation of said arm relative to said tray assembly.

5. The folding tray assembly of Claim 1, wherein said tray assembly comprises a first tray member and a second tray member cooperating to define an inner space of said tray assembly.

6. The folding tray assembly of Claim 5, wherein said actuation arm, said first pin, and said second pin are disposed within said inner space of said tray assembly.

7. The folding tray assembly of Claim 5, wherein said first pin and said second pin extend from said inner space and generally through at least one of said first tray member and said second tray member to engage said support bracket when said first pin member is disposed in said first end of said first cam surface and said second pin member is disposed in said first end of said second cam surface.

8. A folding tray assembly comprising:
a support bracket;
a tray assembly pivotably supported by said support bracket;
a lock plate disposed within said tray assembly and slidable between a first position engaging said support bracket and a second position disengaged from said support bracket; and
at least one biasing member acting on said lock plate to bias said lock plate into said first position.

9. The folding tray assembly of Claim 8, wherein said support bracket includes a slot for matingly receiving said lock plate.

10. The folding tray assembly of Claim 8, wherein said biasing member comprises at least one spring disposed between said lock plate and said tray assembly to bias said lock plate into said first position.

11. The folding tray assembly of Claim 8, wherein said lock plate is operably attached to an actuation mechanism.

12. The folding tray assembly of Claim 11, wherein said actuation mechanism includes a cable attached to a cable seat of said lock plate to selectively move said lock plate against said at least one biasing member and out of said first position.

13. A folding tray assembly comprising:
a first tray member having at least one tab;
a second tray member having at least one slot operable to matingly receive said at least one tab to fix said first tray member to said second tray member; and
a locking mechanism housed within the tray assembly between said first tray member and said second tray member.

14. The folding tray assembly of Claim 13, further comprising an actuation mechanism housed within the tray assembly between said first tray member and said second tray and operable to toggle said locking mechanism between a locked state and an unlocked state.

15. The folding tray assembly of Claim 13, wherein said at least one tab is formed of said first tray member.

16. The folding tray assembly of Claim 13, wherein said at least one tab includes a projection to engage said at least one slot.

17. The folding tray assembly of Claim 13, further comprising a support bracket that rotatably supports the tray assembly between a use position and a stowed position.

18. The folding tray assembly of Claim 17, further comprising a reinforcement bracket rotatably attached to said support bracket and including a series of receptacles.

19. The folding tray assembly of Claim 18, wherein said a first tray member includes a series of posts that are received by said receptacles of said reinforcement bracket to attach said first tray member to said reinforcement bracket.

20. The folding tray assembly of Claim 17, wherein said support bracket includes a lock post that selectively receives a tab of said first tray member to lock the folding tray assembly in a stowed position.
